# EUROPÄISCHE PATENTSCHRIFT

(11) **EP 3 526 427 B1**
(45) Veröffentlichungstag und Bekanntmachung des Hinweises auf die Patenterteilung: **09.09.2020**
(21) Anmeldenummer: 17794664.7
(22) Anmeldetag: 16.10.2017
(51) Int. Cl.: E04G 21/32, F16M 11/04

(54) **ABSTURZSICHERUNG FÜR PERSONEN**
PROTECTIVE DEVICE TO PREVENT PERSONS FROM FALLING
DISPOSITIF DE SÉCURITÉ ANTI-CHUTE POUR LES PERSONNES

(30) Priorität: 17.10.2016 DE 102016012321
(43) Veröffentlichungstag der Anmeldung: 21.08.2019
(73) Patentinhaber: Saygivar, Fiona Gabriella, Rostrevor, Nord-Irland BT34 3AB (GB); Saygivar, Sharon Naomi, Rostrevor, Nord-Ireland BT34 3AB (GB); Saygivar, Lisa Marie, Rostrevor BT34 3AB (GB)
(72) Erfinder: Saygivar, Fiona Gabriella, Rostrevor, Nord-Irland BT34 3AB (GB); Saygivar, Sharon Naomi, Rostrevor, Nord-Ireland BT34 3AB (GB); Saygivar, Lisa Marie, Rostrevor BT34 3AB (GB)
(74) Vertreter: Heyerhoff Geiger & Partner Patentanwälte PartGmbB
(86) Internationale Anmeldenummer: PCT/EP2017/001216
(87) Internationale Veröffentlichungsnummer: WO 2018/072873

(56) Entgegenhaltungen:
- US-A1- 2016 271 430

## Beschreibung

Die Erfindung betrifft eine Absturzsicherung für Personen mit einem Standsockel mit einer Kippkante und einem mit dem Standsockel in Verbindung stehenden Ankermastsystem, an dessen freiem oberen Ende eine persönliche Schutzausrüstung PSA befestigt ist, wobei das Ankermastsystem einen unteren Standabschnitt aufweist, welcher in einem Aufnahmegehäuse um eine horizontal verlaufende Schwenkachse relativ zum Standsockel schwenkbar gelagert ist und wobei am Standabschnitt in seinem der Schwenkachse gegenüber liegenden oberen Endbereich ein Auslegerabschnitt vorgesehen ist, welcher um eine Drehachse relativ zum Standabschnitt drehbar am Standabschnitt gelagert ist und mit seinem freien in seiner Ausgangsstellung nach oben gerichteten Ende mit der PSA in einem Ankerpunkt in Verbindung steht, wobei im Bereich des Aufnahmegehäuses ein Schwenkantrieb vorgesehen ist.

Solche Absturzsicherungen finden überall dort Verwendung, wo kollektive Sicherungen wie Seitenschutz nicht anwendbar sind oder Auffangeinrichtungen wie Sicherungsnetze unzweckmäßig erscheinen. So sei hier beispielhaft auf die US 2016/0271430 A1 verwiesen, welche ein Ankermastsystem zeigt, das auf einer nach oben gerichteten "ausgefahrenen" Ausgangsstellung zu Zwecke des Transports in eine zusammengeklappte Transportposition seines Standabschnittes und seines Auslegerabschnittes verstellbar ist. Für diese Verstellung ist eine Verstellmechanik vorgesehen, durch welche unterschiedliche Ausgansstellungen des Auslegerabschnittes in Abhängigkeit von der zur Verfügung stehenden Raumhöhe fest einstellbar sind. Die Verstellmechanik kann dabei rein manuell bedienbar ausgebildet sein oder mittels eines Elektromotors angetrieben werden. In beiden Fällen ist die ausgefahrene Ausgangsstellung stets starr einzustellen, so dass während des Einsatzes diese Ausgangsstellung unabhängig vom Lastzustand der Absturzsicherung nicht verändert werden kann.

Bei weiter bekannten Absturzsicherungen werden kranartige, mit einem Mastsystem und einem Ausleger versehene Sicherungseinrichtungen eingesetzt, bei denen am äußeren bzw. oberen Endbereich des Auslegers eine sog. persönliche Schutzausrüstung "PSA" angeordnet ist. Eine solche Schutzvorrichtung gegen Absturz ist beispielsweise auf der Internetseite "www.combisafe.com" der Fa. COMBISAFE Deutschland GmbH näher beschrieben. Bei einer Fangeinrichtung in Form einer PSA ist auf einer Art Trommel ein Sicherheitsseil aufgewickelt, welches mit einer Art Haken mit einer Person in Verbindung gebracht werden kann. Bei einem Sturz bzw. einer ruckartigen Belastung am Sicherheitsseil wird die Trommel blockiert, so dass das Sicherheitsseil nicht weiter von der Trommel abgewickelt werden kann. Damit wird das mit der zu sichernden Person in Verbindung stehende Sicherheitsseil gestrafft, so dass die Person gegen einen drohenden Absturz gesichert ist. Wird das Sicherheitsseil wieder entlastet, dann wird die Trommel wieder frei gegeben, so dass sich die zu sichernde Person wieder frei bewegen kann.

Das Haupteinsatzgebiet derartiger Systeme ist hauptsächlich im Schalungsbau für Deckenschalungen anzutreffen.

Einige der angewandten Ankermethoden basieren darauf, den Befestigungspunkt der Fangeinrichtung PSA an einer ausreichend dimensionierten Bodenplatte mit sehr tiefliegendem Ankerpunkt zu befestigen. Diese Methode ist insofern unzweckmäßig, als durch die am Boden liegenden Sicherungsseile der PSA zusätzliche Gefahrenquellen entstehen. Durch das ständige Scheuern der Sicherungsseile können diese beschädigt werden und müssen dementsprechend häufig ersetzt werden.

Eine der momentan am häufigsten verwendeten Methoden basiert darauf, die PSA an einem Auslegerkran mit Standsockel und einer Art Ankermastsystem zu befestigen, um das Sicherungsseil von oben zu der entsprechend zu sichernden Person heran zu führen. Diese Methode hat sich in der Praxis als sehr zweckmäßig erwiesen.

Die Nachteile dieses Systems bestehen darin, dass, um die Standsicherheit zu gewährleisten, Kernhülsen oder Platten bereits in die Planung des Bauvorhabens mit einbezogen werden müssen. Des Weiteren stellen diese Bauteile einen nicht unerheblichen Kostenfaktor dar. Da sich diese Bauteile nicht mehr aus der tragenden Struktur des Bauwerks entfernen lassen, stehen Baustatiker dieser Methode eher skeptisch gegenüber.

Insoweit besteht die Problemstellung darin, ein Ankermastsystem (einen Kran) zu schaffen, das unabhängig von der Bauplanung und Statikstruktur eine ausreichende Standsicherheit (min 6 kN) aufweist und mobil anwendbar ist. Ein solches Ankermastsystem ist mit einigen Problemen verbunden. So steht die Standsicherheit im direkten Verhältnis zu der Sockelmasse und Lage des Kipppunktes zur Ankerhöhe. Eine angestrebte Ankerhöhe von 2,35 m bzw. bis zu 2,50 m über dem Untergrund mit einem Sockeldurchmesser von 3,00 m erfordert eine erhebliche Sockelmasse (ca. 1.150 kg), die zur Überschreitung der Traglast für Deckenschalungen führen würde. Würde man die Sockelmasse auf ca. 600 kg reduzieren, müsste die Standfläche des Standsockels mindestens auf einen Durchmesser von ca. 5,00 m vergrößert werden. Eine Reduzierung der Ankerhöhe führt zum Verlust der Zweckmäßigkeit und erscheint wenig sinnvoll.

Ziel der Erfindung ist die Schaffung einer Absturzsicherung mit einem Ankermastsystem, das bei einer maximalen Sockelmasse des Standsockels von 450 kg bis 500 kg und einer Standfläche mit einem Durchmesser von ca. 2,50 m einen Standsicherheitsfaktor von 1,25 bei einer horizontal einwirkenden Last von 6 kN und maximal von 9 kN kurzzeitig dynamisch aufweist.

Davon ausgehend, dass bei üblichen Arbeitsabläufen keine zu sichernde Last von außen auf dieses System einwirkt, wäre ein Sockel mit den oben genannten Abmessungen ausreichend.

Da bei einem Absturz einer am Ankerpunkt mit PSA-Einrichtung befestigten Person die horizontal einwirkende Kraft, nach EN-Richtlinien auf bis zu 6 kN und maximal bis zu 9 kN ansteigen kann, müssen mit einem mechanischen System die Grundbedingungen geändert werden.

Das Hauptmerkmal dieser technischen Absturzsicherung besteht darin, dass das Ankermastsystem einen beweglichen und geometrisch geführten Arm aufweist, der aus einer gestreckten Ausgangslage ab einer kritischen Lasteinflussgröße (Auslösekraft) in eine "abgewinkelte" Sicherheitsstellung verstellbar ist, so dass die Position des Ankerpunktes, an welchem die PSA befestigt ist, relativ zum Standsockel nach unten und gleichzeitig weg von der Kippkante des Standsockels geführt wird.

Diese Aufgabe wird erfindungsgemäß zusammen mit den Merkmalen des Oberbegriffes des Anspruches 1 dadurch gelöst, dass im Schwenkantrieb oder im Ausleger-abschnitt ein mechanischer Sensor vorgesehen ist, welcher bei einer Lasteinwirkung auf den Ankerpunkt der persönlichen Schutzausrüstung (PSA) die größer als eine vorbestimmte Auslösekraft ist direkt oder indirekt auf den Schwenkantrieb einwirkt und zu dessen sofortiger Aktivierung führt und eine Sicherheitsfunktion auslöst, durch welche der Standabschnitt und der Auslegerabschnitt aus einer gestreckten, nach oben gerichteten Ausgangsstellung in eine abgewinkelte Sicherheitsstellung verstellt wird, in welcher der Ankerpunkt eine relativ zum Standsockel nach unten und gleichzeitig weg von der Kippkante des Standsockels in Richtung des Aufnahmegehäuses verstellte Position einnimmt.

Die Grundgeometrie dieses Ankermastsystems wird in seiner Ausgangsstellung durch einen Schwenkantrieb in Form eines intelligent arretierten Federpakets in Position gehalten, wobei das Federpaket in ähnlicher Art und Weise ausgebildet sein kann wie ein Federbein. In dieser Ausgangsstellung ist das ganze System aus Ankermastsystem und Aufnahmegehäuse um 360° um eine vertikale Drehachse drehbar. Bei Stürzen eines mit der PSA verbundenen Person mit geringer Lasteinwirkung auf den Schwenkantrieb bzw. auf den Ankerpunkt der PSA unterhalb einer vorbestimmten Auslösekraft bleibt dieser gestreckte Zustand des Ankermastsystems mit seinem Standabschnitt und seinem Auslegerabschnitt unverändert.

Lasteinwirkungen auf den Schwenkantrieb bzw. auf den Ankerpunkt der PSA, die größer als die Auslösekraft sind, beispielsweise größer als 2 kN, werden über einen im Schwenkantrieb oder im Auslegerabschnitt integrierten mechanischen Sensor erkannt, welcher direkt oder indirekt auf den Schwenkantrieb einwirkt und zu dessen sofortiger Aktivierung führt und somit eine Sicherheitsfunktion auslöst.

Bei Aktivierung dieser Sicherheitsfunktion wird das Ankermastsystem mit seinem Aufnahmegehäuse sofort mechanisch gegen Verdrehen gegenüber dem Standsockel gesichert. Der Schwenkantrieb mit seinem Federpaket wirkt dabei der äußeren Krafteinwirkung entgegen und verlagert das Ankermastsystem aus seiner im Wesentlichen vertikal verlaufenden neutralen Ausgangsstellung in eine schräg nach "hinten" von der Kippkante des Standsockels weg weisende Sicherheitsstellung und somit, bedingt durch die Systemgeometrie, den Ankerpunkt nach unten und gleichzeitig weg von der Kippkante. Dieser Vorgang kann dabei mechanisch aktiviert und geregelt durchgeführt werden.

Durch den Einsatz dieses Ankermastsystems können alle Vorteile einer von oben geführten PSA-Einrichtung genutzt werden. Es entstehen keine zusätzlichen Gefahrenstellen durch am Boden liegende Sicherungsseile. Der Arbeitsbereich umfasst je nach Länge der verwendeten PSA einen Radius von 10 m. Eine Beschädigung der Sicherungsseile durch Scheuern ist ausgeschlossen. Dieses Ankermastsystem ist mobil und individuell einsetzbar. Es entstehen keine zusätzlichen Kosten durch vorab im Bodenbereich zu positionierende Kernhülsen. Die Statik von Stützpfeilern wird nicht beeinflusst. Auf eine Berücksichtigung in der Bauplanung kann verzichtet werden.

Dabei kann beispielsweise ein sicheres Standmoment von 1,25 bei 6 kN horizontaler Lasteinwirkung im Bereich des Ankerpunktes oder von 2,0 bei 3 kN Sicherungslast garantiert werden. Insoweit wird durch die Funktionsweise des erfindungsgemäßen Ankermastsystems die Standsicherheit nach dem Auslösen durch die Aktvierung des Schwenkantriebes wesentlich erhöht, da der Ankerpunkt nach unten und von der Kippkante des Standsockels weg geführt wird. Damit wird insbesondere der Abstand des Ankerpunktes vom Untergrund verringert, so dass die am Ankerpunkt wirkenden Horizontalkräfte ein erheblich geringeres Kippmoment erzeugen.

Weitere vorteilhafte Ausgestaltungen der Erfindung, insbesondere in Bezug auf den Aufbau und die Funktion des Schwenkantriebes, sind den weiteren Unteransprüchen zu entnehmen.

So kann gemäß Anspruch 2 vorgesehen sein, dass der Schwenkantrieb nach Art eines Federbeines ausgebildet ist und eine zwischen zwei Federtellern angeordnete, in der Ausgangstellung des Schwenkantriebes unter Vorspannung stehende komprimierte Feder aufweist, welche bei Aktivierung des Schwenkantriebes durch eine mechanische Entriegelungsvorrichtung entspannbar wird. Diese Ausgestaltung erlaubt einen einfachen und effektiv wirkenden Aufbau des Schwenkantriebes.

Weiter kann gemäß Anspruch 3 vorgesehen sein, dass der erste Federteller in einem Endbereich eines Arbeitszylinders feststehend angeordnet ist und dass der zweite Federteller am Ende einer Kolbenstange feststehend angeordnet ist und dass die Kolbenstange im Arbeitszylinder begrenzt axial verstellbar aufgenommen ist und in ihrem dem zweiten Federteller gegenüberliegenden Endbereich einen Führungskolben aufweist.

Die Ausgestaltung gemäß Anspruch 4 betrifft die Funktionsweise der mechanischen Auslösung bzw. der Aktivierung des Schwenkantriebes. Danach kann vorgesehen sein, dass der Arbeitszylinder in seinem dem zweiten Federteller gegenüberliegenden Endbereich einen Verschluss aufweist, in welchem ein in den Arbeitszylinder hinein ragender Fixierdorn angeordnet ist, welcher in seinem in den Arbeitszylinder hinein ragenden Endbereich eine umlaufende Nut aufweist und dass die Kolbenstange in ihrem zum Verschluss hin liegenden Endbereich eine in einem Durchbruch einer Zylinderwand der Kolbenstange angeordnete Rastkugel aufweist, welche durch eine Entriegelungshülse in der umlaufenden Nut des Fixierdorns in der Ausgangsstellung des Schwenkantriebes gehalten ist und dass die Entriegelungshülse durch Entriegelungsstifte relativ zur Kolbenstange in eine Stellung verschiebbar ist, in welcher die Rastkugel durch eine abgestufte Innenbohrung der Entriegelungshülse freigegeben und radial nach außen verstellbar ist, so dass die Formschlussverbindung zwischen der Kolbenstange und dem Fixierdorn aufgehoben ist und die Kolbenstange aus dem Arbeitszylinder durch die Federkraft der Feder herausgeschoben und in ihre Sicherungsstellung bringbar ist.

Weiter kann für die Freigabe der Rastkugel und somit der Kolbenstange im Arbeitszylinder gemäß Anspruch 5 vorgesehen sein, dass auf dem Fixierdorn ein Auslösezylinder axial verstellbar angeordnet ist, in dessen dem Fixierdorn benachbarten Endbereich eine mit Hydraulikmedium gefüllte Überwachungskammer vorgesehen ist und dass das Hydraulikmedium über ein Druckbegrenzungsventil aus der Überwachungskammer zur Druckreduzierung entweichen kann und dadurch der Auslösezylinder in einer Stellrichtung verstellbar ist und die Entriegelungsstifte mit der Entriegelungshülse in die Entriegelungsstellung zur Freigabe der Rastkugel verstellt werden.

Zur Bewegungsdämpfung der Stellbewegung der Kolbenstange aus ihrer Ausgangsstellung in Ihre Endstellung kann die Merkmalskombination gemäß Anspruch 6 vorgesehen sein. Danach kann die Kolbenstange in ihrem der Entriegelungshülse benachbarten Endbereich mit Überströmkanälen versehen sein, welche von einer zwischen der Kolbenstange und dem Arbeitszylinder liegenden, mit Hydraulikmedium gefüllten Dämpfungskammer zu einem zwischen dem Verschluss und dem Führungskolben liegenden Aufnahmeraum innerhalb des Arbeitszylinders führen und durch welche bei der Verstellung der Kolbenstange aus ihrer Ausgangsstellung in ihre ausgefahrene Endstellung Hydraulikmedium zur Bewegungsdämpfung hindurch strömt.

In einer weiteren Ausführungsvariante kann der Schwenkantrieb nach Anspruch 7 ebenfalls nach Art eines Federbeines ausgebildet sein und eine zwischen zwei Federtellern angeordnete, in der Ausgangsstellung des Schwenkantriebes unter Vorspannung stehende, komprimierte Feder eines Federpaketes aufweisen, welche bei Aktivierung des Schwenkantriebes durch eine Entriegelungsvorrichtung entspannbar wird. Im Bereich des Federpakets ist ein Hydraulikzylinder mit einem Druckraum vorgesehen, dessen Kolbenstange bei Anliegen eines vorgegebenen Systemdruckes im Druckraum in einer verkürzten Ausgangsstellung des Hydraulikzylinders gehalten wird.

Hierzu kann gemäß Anspruch 8 weiter vorgesehen sein, dass die Entriegelungsvorrichtung eine Auslösemechanik mit einem Fangschlitten aufweist, und dass der Fangschlitten begrenzt axial verstellbar im Auslegerabschnitt angeordnet ist und bei Krafteinwirkung, welche größer ist als eine vorgegebene Auslösekraft aus einer Ausgangsstellung in eine Sicherungsstellung bringbar ist und, dass durch die Stellbewegung des Fangschlittens ein Sicherheitsventil betätigbar ist, durch dessen Verstellung aus einer geschlossenen Sperrstellung in eine geöffnete Durchlassstellung der Systemdruck im Druckraum des Hydraulikzylinders zum Auslösen der Sicherheitsfunktion des Schwenkantriebs abgebaut wird.

Zum Vorspannen des Federpaketes kann bei dieser zweiten Ausführungsvariante des Schwenkantriebes der im Schwenkantrieb integrierte Hydraulikzylinder genutzt werden. Danach kann gemäß Anspruch 9 vorgesehen sein, dass zum Zurückstellen des Schwenkantriebes aus der ausgelösten Sicherheitsposition in die verkürzte Ausgansstellung eine Hydraulikpumpe zum Erzeugen des Systemdruckes vorgesehen ist und dass der Systemdruck dem Hydraulikzylinder des Schwenkantriebes über eine Druckleitung und über die Kolbenstange zuführbar ist und bei Erreichen des vorbestimmten Systemdruckes im Druckraum eine Verstellung der Kolbenstange im Hydraulikzylinder entgegen der Federkraft des Federpakets bewirkt wird.

Anhand der Zeichnungen wird die Erfindung nachfolgend näher erläutert. Es zeigt:
Fig. 1 eine Seitenansicht einer Absturzsicherung mit einem Standsockel und einem Ankermastsystem in ihrer gestreckten Ausgangsstellung;
Fig. 2 die Absturzsicherung aus Fig. 1 in ihrer aktivierten Sicherungsstellung des Ankermastsystems;
Fig. 3 einen Schwenkantrieb in Form eines Federpaketes in seiner inaktiven, verkürzten Ausgangsstellung;
Fig. 4 den Schwenkantrieb aus Fig. 3 in seiner "ausgefahrenen" aktiven Sicherungsstellung;
Fig. 5 eine Schnittdarstellung einer zweiten Ausführungsvariante eines Schwenkantriebes in seiner inaktiven, verkürzten Ausgangsstellung, in welcher das Federpaket des Schwenkantriebs unter Vorspannung steht;
Fig. 6 die Schnittdarstellung des Schwenkantriebs aus Fig. 5, in welcher sich der Schwenkantrieb in seiner "ausgefahrenen" aktiven Sicherungsstellung befindet;
Fig. 7 eine Schnittdarstellung eines Auslegeabschnittes mit einem integrierten, mechanischen Sensor, welcher zum Auslösen bzw. zur Aktivierung des Schwenkantriebs aus den Fig. 5 und 6 vorgesehen ist;
Fig. 8 einen Horizontalschnitt VIII - VIII durch den im Auslegerabschnitt aus Fig. 7 integriert angeordneten als "Fangschlitten" ausgebildeten Sensor;
Fig. 9 ein Schaltbild zur Funktion und des prinzipiellen Aufbaus des Schwenkantriebs aus den Fig. 5 und 6 sowie des integrierten Sensors aus den Fig. 7 und 8.

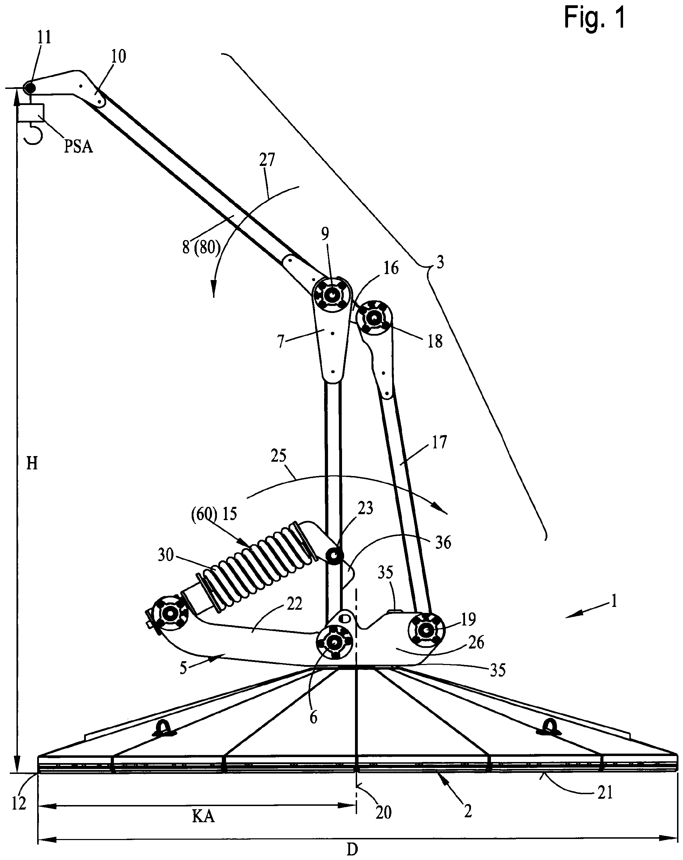

Fig. 1 zeigt eine Seitenansicht einer erfindungsgemäßen Absturzsicherung 1, welche einen Standsockel 2 und ein Ankermastsystem 3 aufweist. Der Durchmesser D des Standsockels 2 beträgt bei dem dargestellten Ausführungsbei-spiel etwa 2,5 m. Weiter ist aus Fig. 1 erkennbar, dass auf dem Standsockel 2 ein Aufnahmegehäuse 5 angeordnet ist, welches am Standsockel 2 bei nicht ausgelöstem Schwenkantrieb 15 bzw. 60 um die vertikale Drehachse 20 drehbar gelagert ist. Das Aufnahmegehäuse 5 weist ober-seitig das Ankermastsystem 3 auf, welches in der in Fig. 1 in seiner nach oben gerichteten, gestreckten Ausgangsstellung dargestellt ist und aus einem am Aufnahmegehäuse 5 um eine Schwenkachse 6 des Aufnahmegehäuses 5 schwenkbar gelagerten Standabschnitt 4 und einem Auslegerabschnitt 8 besteht. Der Auslegerabschnitt 8 ist am Standabschnitt 4 in dessen der Schwenkachse 6 gegenüber liegenden Endbereich über eine Drehachse 9 drehbar gelagert. In seinem der Drehachse axial gegenüber liegenden Endbereich 10 bildet der Auslegerabschnitt einen Ankerpunkt 11, mit welchem eine in Fig. 1 lediglich schematisch dargestellte "persönliche Schutzausrüstung" (PSA) feststehend verankerbar ist. Im Ankerpunkt 11 wirken somit im normalen Betrieb die von einer Peron aufgebrachten Kräfte, welche bei einer schlagartigen Belastung der PSA eine Blockierung des Sicherheitsseils des PSA bewirken, so dass eine mit der PSA in Verbindung stehende Person gesichert ist. Im Prinzip wirkt diese PSA in ihrer Funktionsweise ähnlich wie ein Sicherheitsgurt, wie dies bei Kraftfahrzeugen bekannt ist.

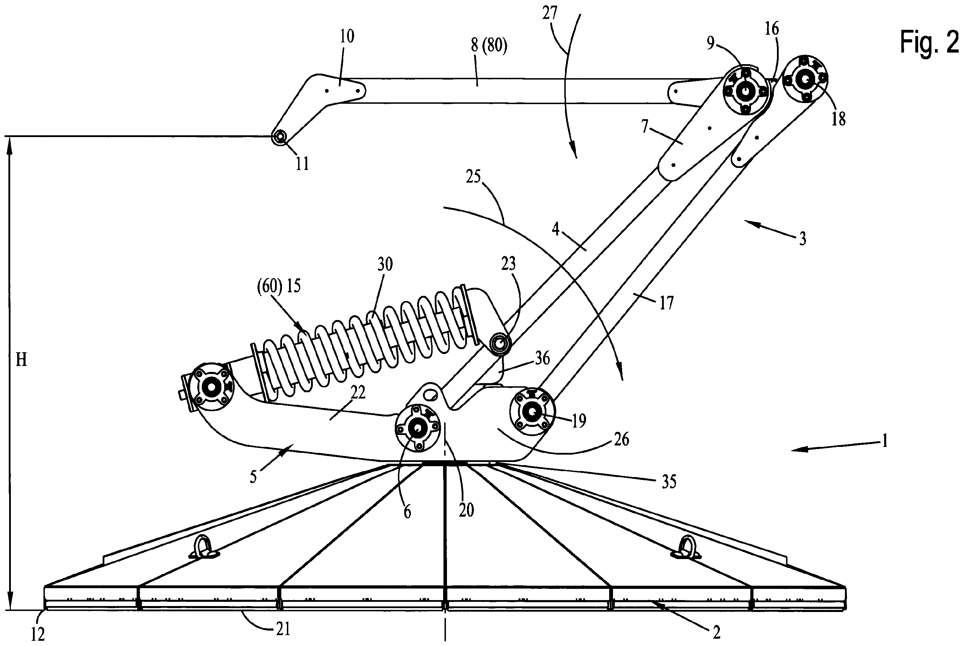

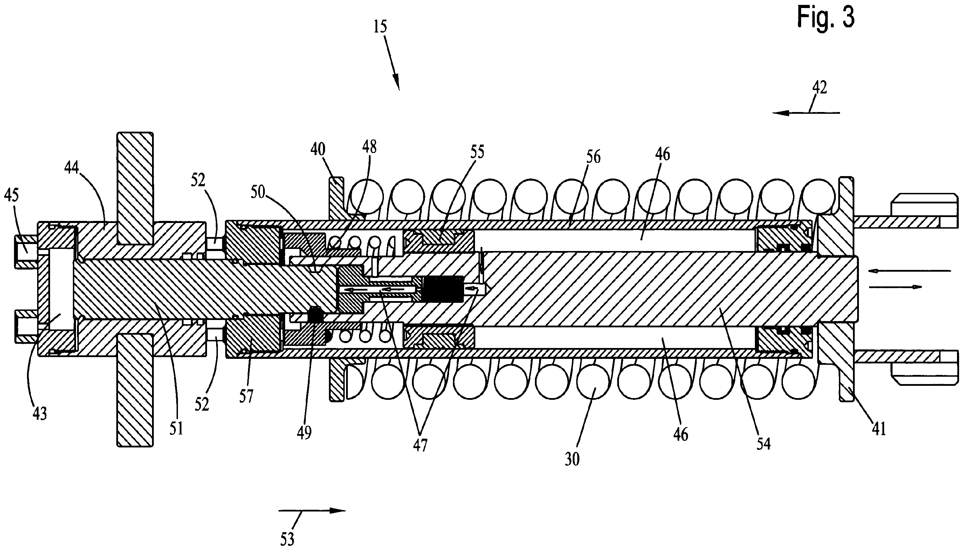

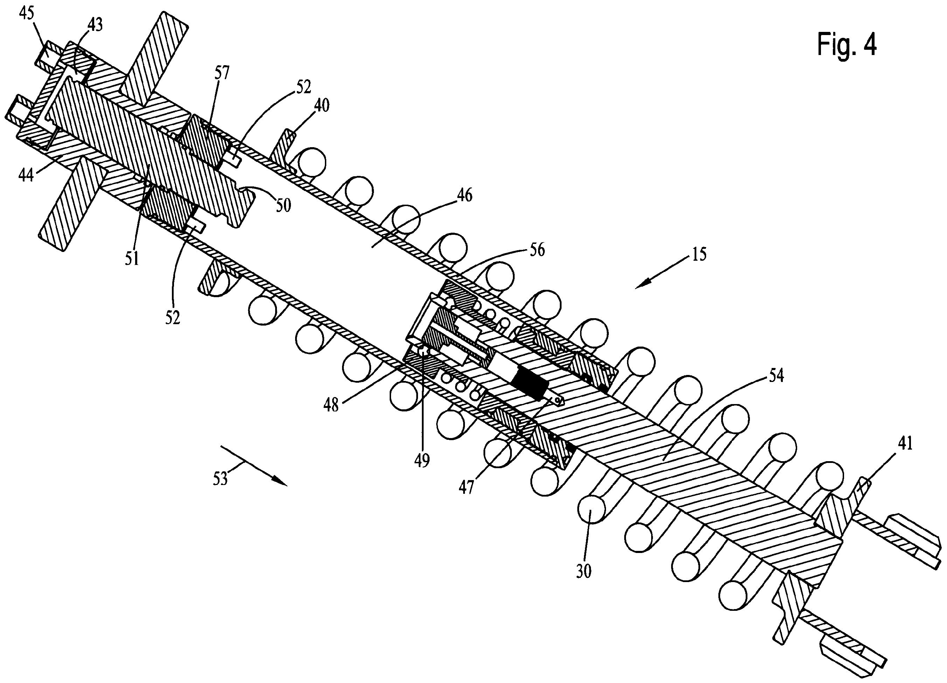

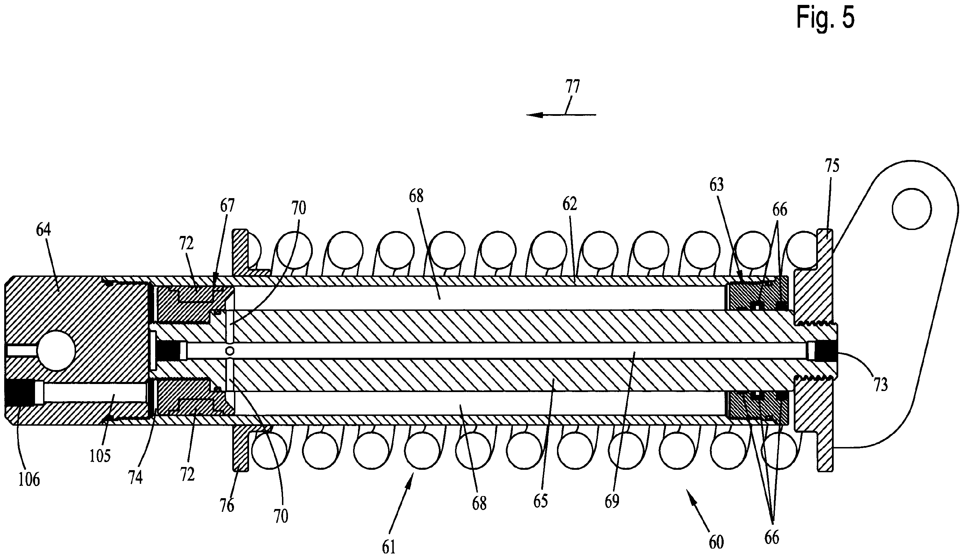

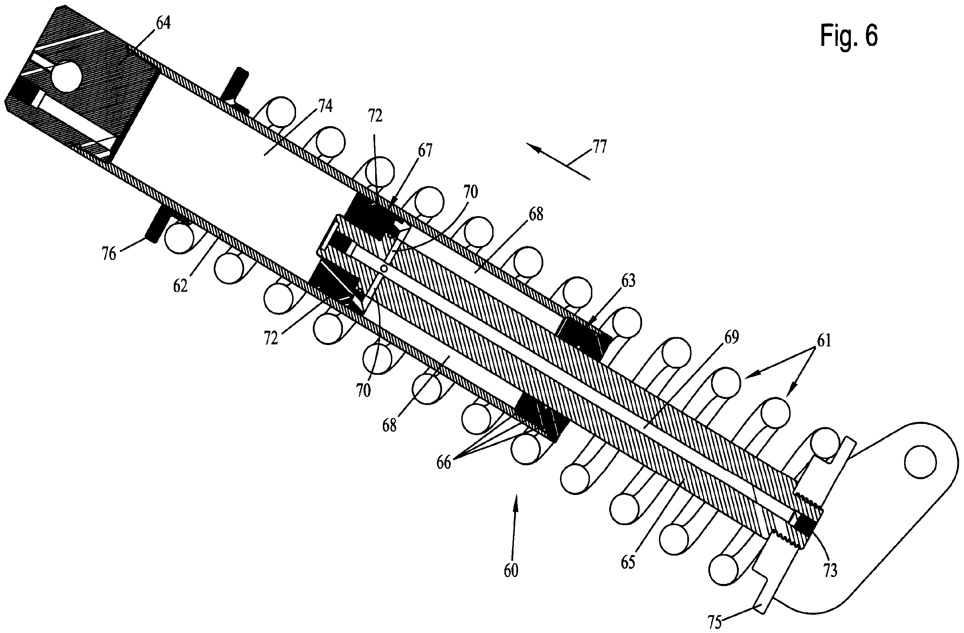

Weiter ist aus Fig. 1 erkennbar, dass das Aufnahmegehäuse 5 einen Schwenkantrieb aufweist, welcher in Fig. 1 und 2 mit den Bezugszeichen 15 und 60 gekennzeichnet ist, da es zu diesem Schwenkantrieb zwei unterschiedliche Ausführungsvarianten gibt, von welchen eine erste Ausführungsvariante des Schwenkantriebs 15 in den Fig. 3 und 4 und eine zweite Ausführungsvariante des Schwenkantriebs 60 in den Fig. 5 und 6 dargestellt und beschrieben ist.

Dieser Schwenkantrieb 15, 60 ist zwischen einem Stützarm 22 und dem Standabschnitt 4 angeordnet. Dieser Schwenkantrieb 15, 60 befindet sich in der in Fig. 1 dargestellten Stellung in einer verkürzten Ausgangslage, in welcher der Standabschnitt 4 in der in Fig. 1 dargestellten Ausgangslage fixiert wird. Diese verkürzte Ausgangslage der ersten Ausführungsvariante des Schwenkantriebes 15 ist auch in Fig. 3 dargestellt. Die verkürzte Ausgangslage der zweiten Ausführungsvariante des Schwenkantriebs 60 ist in Fig. 5 dargestellt. In dieser Ausgangslage beträgt die Höhe H des Ankerpunktes 11 über der Standfläche 21 des Standsockels 2 etwa 2,5 m.

Die Sockelmasse des Standsockels 2 beträgt 450 kg (4,5 kN) inkl. Aufbau. Der Abstand KA von der mittleren, vertikalen Drehachse 20 zur "vorderen" Kippkante 12 des Standsockels 2 beträgt beim vorliegenden Ausführungsbeispiel 1.250 mm. In dieser Konfiguration kann aufgrund des eingebauten Sicherheitssystems auf eine Standsicherheitsberechnung verzichtet werden. Die Standsicherheit wird durch praktische Belastungstests ermittelt und dient der Definierung der Auslösekraft zur Aktivierung der Sicherungsfunktion. Der ermittelte Wert bestimmt die Aktivierung der Sicherheitsfunktion mit einem Sicherheitsfaktor von 1,25. Die Auslösekraft wird dabei im Ankerpunkt 11 in das Ankermastsystem eingeleitet und wirkt über den Lagerpunkt 23 zwischen dem Schwenkantrieb 15 und dem Standabschnitt 4 auf den Schwenkantrieb.

Des Weiteren ist aus Fig. 1 erkennbar, dass der Auslegerabschnitt 8 in etwa gerader Verlängerung bezüglich der Drehachse 9 einen Stellhebel 16 aufweist, welcher mit einer Schubstange 17 über ein Gelenk 18 in gelenkiger Verbindung steht. Mit einem dem Gelenk 18 axial gegenüberliegenden Endbereich ist die Schubstange 17 über ein weiteres Drehgelenk 19 mit einem rückwärtigen Stützhebel 26 des Aufnahmegehäuses 5 drehbar verbunden. Der Abstand zwischen der Schwenkachse 6 und dem Drehgelenk 19 ist dabei größer gewählt als der Abstand zwischen der Drehachse 9 und dem Gelenk 18.

Bedingt durch diese geometrische Bauweise überträgt sich die einwirkende Last im Falle eines Absturzes vom oberen Ankerpunkt auf den Lagerpunkt 23. Wird dabei ein fest definierter Auslösewert der Last überschritten, führt dies zur Auslösung der Sicherheitsfunktion bzw. des Schwenkantriebs 15. Durch die Aktivierung wird mittels einer vorgespannten Feder 30 bzw. Federpakets 30 des Schwenkantriebs 15, wie später noch näher erläutert wird, der Ankermast gegen Verdrehen gesichert und zusammengeklappt. Ein solches Federpaket ist auch bei der zweiten Ausführungsvariante des Schwenkantriebs 60 vorhanden und in den Fig. 5 und 6 mit dem Bezugszeichen 61 gekennzeichnet. Bei der ersten Ausführungsvariante des Schwenkantriebs 15 ist zur Auslösung der Sicherheitsfunktion eine Lastübertragung auf den Lagerpunkt 23 erforderlich, da über diesen ein mechanischer Sensor in Form einer Überwachungskammer 43 aus den Fig. 3 und 4 das Auslösen der Sicherheitsfunktion bewirkt.

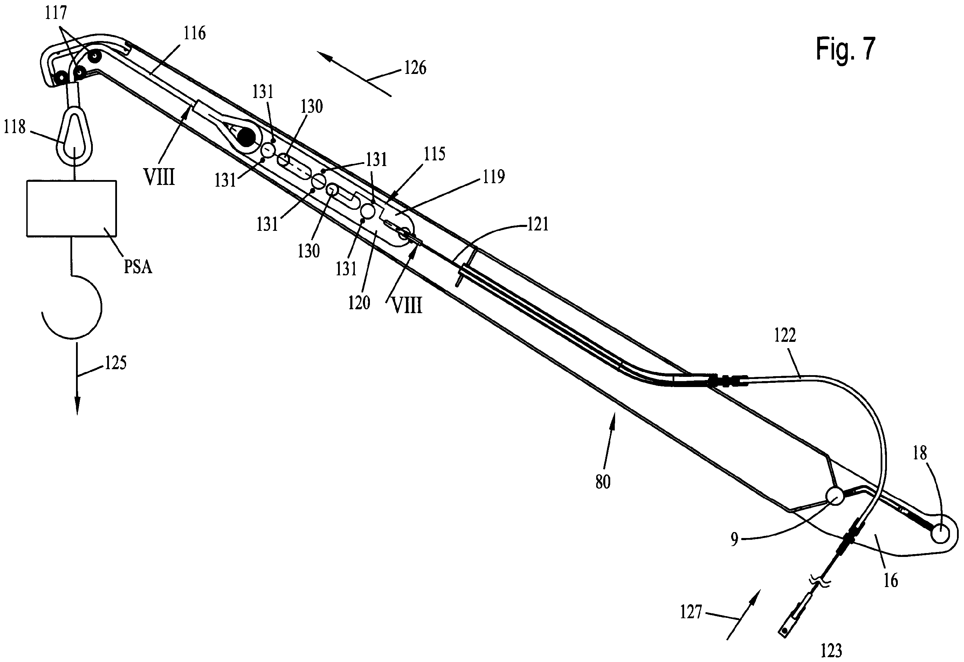

Bei der zweiten Ausführungsvariante des Schwenkantriebes 60 ist im Auslegerabschnitt 80 eine andere Art von mechanischem Sensor 86 vorgesehen, welcher zu Fig. 7 später noch näher erläutert wird. Der Auslegerabschnitt 80 aus Fig. 7 entspricht dabei dem Auslegerabschnitt 8 aus den Fig. 1 und 2.

Bei Auslösen der Sicherheitsfunktion wird sowohl in Bezug auf den Schwenkantrieb 15 als auch den Schwenkantrieb 60 durch den Schwenkantrieb 15 bzw. 60 der Standabschnitt 4 über den Lagerpunkt 23 in Richtung des Pfeils 25 nach "hinten" geschwenkt. Bei dieser Schwenkbewegung wird der am oberen Ende drehbar angelenkte Auslegerabschnitt 8 bzw. 80 aus Fig. 7 auf Grund seiner Wirkverbindung über den Stellhebel 16 und die Schubstange 17 mit dem rückwärtigen Stützhebel 26 um die Drehachse 9 in Richtung des Pfeils 27 gedreht. Damit wird der Ankerpunkt 11 des Auslegerabschnittes 8 bzw. 80 gleichzeitig nach unten und weg von der vorderen Kippkante 12 des Standsockels 2 bewegt.

Diese Position zeigt beispielhaft Fig. 2. Es ist erkennbar, dass sich der Ankerpunkt 11 durch die Schwenkbewegung des Standabschnittes 4 und die Drehbewegung des Auslegerabschnittes 8 bzw. 80 nach unten und nach rechts, also weg von der vorderen Kippkante 12 des Standsockels 2 bewegt hat. Durch die Verstellung des Ankerpunktes 11 insbesondere auch relativ zur Standfläche 21 des Standsockels 2 verringert sich auch zwangsläufig die Höhe H des Ankerpunktes 11 zum Untergrund, auf welcher die Standfläche 21 des Standsockels 2 aufgestellt ist.

Auf Grund dieser verringerten Höhe H des Ankerpunktes 11 über der Standfläche 21 des Standsockels 2 wird zwangsläufig auch das auf die gesamte Absturzsicherung 1 einwirkende Kippmoment erheblich verringert. Das Verlagern des Wirkpunktes bzw. des Ankerpunktes 11 erfolgt dabei vorzugsweise gedämpft und in einem bestimmten Zeitfenster von 0,5 bis 1,0 Sek. Diese Dämpfung kann dabei durch ein im Schwenkantrieb 15 integriertes Dämpfungsmodul oder einen parallel zum Schwenkantrieb 15 bzw. 60 geschalteten Dämpfer erreicht werden.

Nachfolgend wird das Sicherheitsmodul einer ersten Ausführungsvariante des in den Fig. 3 und 4 näher dargestellten Schwenkantriebs 15 noch näher erläutert. Eine zweite Ausführungsvariante des Schwenkantriebs 60 ist zu den Fig. 5 und 6 beschrieben, welche beide dieselbe Aufgabe erfüllen. Dieses Sicherheitsmodul bzw. der Schwenkantrieb 15 bzw. 60 bildet das Kernelement der Absturzsicherung 1 mit seinem beweglichen, d.h. zusammenklappbaren Ankermastsystem 3. Die grundsätzliche Aufgabe des Sicherheitsmoduls bzw. des Schwenkantriebs 15 bzw. 60 besteht zum einen darin, das Ankermastsystem 3 mit seinem Standabschnitt 4 und seinem Auslegerabschnitt 8 bzw. 80 in deren in Fig. 1 dargestellten Ausgangsstellung zu halten.

Des Weiteren soll die im Falle einer durch PSA gesicherten Person ansteigende Kraft in Richtung der Kippkante 12 erkannt werden.

Bei Überschreitung der Auslösekraft soll das Sicherheitsmodul bzw. der Schwenkantrieb 15 bzw. 60 sofort entsperren und über die Federwirkung des Schwenkantriebs 15 bzw. 60 das Ankermastsystem 3 in seine Sicherungsposition drücken, wie diese in Fig. 2 dargestellt ist.

Des Weiteren kann beim Auslösen des Schwenkantriebs 15 bzw. 60 auch die Drehfunktion des Aufnahmegehäuses 5 gegenüber dem Standsockel durch eine mechanische Arretierung aufgehoben werden. Diese mechanische Arretierung kann beispielsweise durch einen Sicherungsbolzen 35 erfolgen, welcher durch den in die Sicherungsposition verstellten Standabschnitt 4 betätigt werden kann, wie dies insbesondere den Fig. 1 und 2 zu entnehmen ist. Dazu kann am Standabschnitt 4 ein Stellelement 36 vorgesehen sein.

Nachfolgend sei die Funktionsweise der "mechanischen" Entsperrung des Schwenkantriebs 15 anhand der Fig. 3 und 4 kurz erläutert. In Fig. 3 befindet sich der Schwenkantrieb 15 in seiner nicht ausgelösten, verkürzten Ausgangslage. In dieser Ausgangslage ist der Schwenkantrieb 15 "komprimiert", so dass dessen Feder 30 unter Vorspannung zwischen zwei Federtellern 40 und 41 aufgenommen ist.

Durch ein Ansteigen der Kraft in Belastungsrichtung des Pfeils 42 erhöht sich der Druck in der mit Öl gefüllten Überwachungskammer 43 des Auslösezylinders 44. Der Auslösezylinder 44 behält dabei solange seine Position, bis die Belastung, d.h. der Öldruck im Auslösezylinder 44, den Auslösepunkt erreicht. Ist diese Druckbelastung erreicht, so verschiebt sich die Kolbenstange 54 mit ihrem Führungskolben 55 in Richtung des Pfeils 53, so dass der zwischen dem Führungskolben 55 und dem Verschluss 57 des Arbeitszylinders 56 erkennbare, in der Zeichnung nicht näher bezeichnete Aufnahmeraum im Arbeitszylinder 56 vergrößert wird.

Dabei strömt Hydraulikmedium aus einer zwischen der Kolbenstange 54 und dem Arbeitszylinder 59 gebildeten Dämpfungskammer 46 über in der Kolbenstange 56 angeordnete Überströmkanäle 47 in den Bereich eines dieser Aufnahmeräume.

In der in Fig. 3 dargestellten Ausgangslage wird durch eine auf der Kolbenstange 54 angeordnete Entlastungshülse 48 über eine abgestufte, in der Zeichnung nicht näher bezeichnete Innenbohrung der Entlastungshülse 48 bei Erreichen der oben genannten Belastung eine in einem Durchbruch einer Zylinderwand am Ende der Kolbenstange 54 angeordnete Rastkugel 49 mit einer umlaufenden Nut 50 eines Fixierdorns 51 in Eingriff gehalten.

Bei Erreichen des Auslösepunktes entweicht das stützende Hydraulikmedium der Überwachungskammer 43 über ein angeschlossenes Druckbegrenzungsventil 45, so dass der Druck innerhalb der Überwachungskammer 43 bis zu einem durch das Druckbegrenzungsventil 45 vorbestimmten "Grenzdruck" abnimmt, so dass bei diesem Vorgang nun der Auslösezylinder 44 gegen die Entriegelungsstifte 52 und die Entriegelungshülse 48 ebenfalls nach rechts in Richtung des Pfeils 53 verstellt wird.

Durch das Verschieben der Entriegelungshülse 48 mit ihrer Innenbohrung in einen Bereich größeren Durchmessers kann nun die Rastkugel 49 radial nach außen in diesen Bereich der vergrößerten Innenbohrung wandern, so dass die formschlüssige Verbindung der Rastkugel 49 mit der umlaufenden Nut 50 des Fixierdorns 51 aufgehoben wird. Nach Aufhebung dieser "Rastverbindung" wird nun die Kolbenstange 54 freigegeben, so dass sich die Kolbenstange 54 zusammen mit dem Federteller 41 aus der in Fig. 3 dargestellten Position in die in Fig. 4 dargestellte ausgelöste aktive Position in Richtung des Pfeils 43 begibt. Dabei wird die Kolbenstange 54 über einen Führungskolben 55 im Arbeitszylinder 56 des Schwenkantriebs 15 geführt.

Das Auslösen des Schwenkantriebs 15 erfolgt also durch eine axiale Belastung des Schwenkantriebes 15 in Richtung des Pfeils 42. Bei Erreichen einer vorbestimmten Axialkraft werden die Entriegelungsstifte 52 in den linken Verschluss 57 des Arbeitszylinders 56 nach rechts in Richtung des Pfeil 53 "eingeschoben", wodurch die oben beschriebene axiale Verstellung der Entriegelungshülse 48 bewirkt wird.

Durch die Verstellung der Entriegelungshülse 48 in Richtung des Pfeils 53 wird die Rastkugel 49 freigegeben und kann radial nach außen ausweichen. Dadurch wird die Sperrwirkung der Rastkugel 49 zwischen der Kolbenstange 54 und dem inneren Teil des Fixierdorns 51 aufgehoben, so dass die Kolbenstange 54 zusammen mit dem Federteller 41 durch die Federkraft der Feder 30 nach rechts verstellt werden kann und somit das Ankermastsystem 3 aus der in Fig. 1 dargestellten Ausgangslage in die in Fig. 2 dargestellte Sicherungsposition gebracht wird.

Die erfindungsgemäße Absturzsicherung schafft es über die Verlagerung des Ankerpunkts der PSA mit einem Eigengewicht von 450 kg, ein Gewicht von 750 kg abzusichern. Durch die physikalische Kraft der Hebelwirkung und neuster Sicherheitstechnik leistet sie den optimalen Schutz bei der Arbeit in jeder Höhenlage. Bei einem Gesamtgewicht von gerade einmal 450 kg macht sie das zur mobilen Absicherung bei der Arbeit auf der Baustelle. Mit Hilfe eines Handhubwagens kann sie stets sicher zu ihrem Einsatzort transportiert werden. Eine intuitive Handhabung ermöglicht dem Nutzer schnelles und sicheres Arbeiten. Das bedeutet, dass die erfindungsgemäße Absturzsicherung nur einmalig mit dem Kran an ihren Einsatzort gehievt werden muss und danach ein selbständiges Arbeiten zulässt. Eine Überkopfankerung und ein kugelgelagertes Gehäuse sorgen für den optimalen Aktionsradius bei der Arbeit.

Weiter zeigen die Fig. 5 und 6 eine zweite Ausgestaltungsmöglichkeit eines Schwenkantriebs 60, welcher ebenfalls eine Art Federpaket 61 in Form einer Feder aufweist. In Fig. 5 ist der Schwenkantrieb 60 in seiner verkürzten Ausgangsstellung dargestellt, in welcher das Ankermastsystem 3 mit seinem Standabschnitt 4 und seinem Auslegerabschnitt 8 bzw. 80 in der in Fig. 1 dargestellten Ausgangstellung gehalten wird. Dabei ist aus den Fig. 5 und 6 erkennbar, dass der Schwenkantrieb 60 einen zentralen Hydraulikzylinder 62 aufweist, welcher einerseits mit einem Hydraulikdeckel 63 auf der rechten Seite der Zeichnung und andererseits mit einem Hydraulikdeckel 64 auf der linken Seite verschlossen ist. Der rechte Hydraulikdeckel 63 ist dabei ringförmig ausgebildet und wird von einer zentralen Kolbenstange 65 axial verstellbar durchragt. Zur hydraulischen Abdichtung der Kolbenstange 65 gegenüber dem Hydraulikdeckel 63 ist eine mehrteilige Dichtungsanordnung vorgesehen, welche insgesamt mit dem Bezugszeichen 66 gekennzeichnet ist. Auf der axial gegenüberliegenden Seite der Kolbenstange 65 ist diese mit einem Ringkolben 67 versehen, welcher gegenüber dem Hydraulikzylinder 62 über eine weitere Dichtungsanordnung 72 axial verstellbar abgedichtet ist.

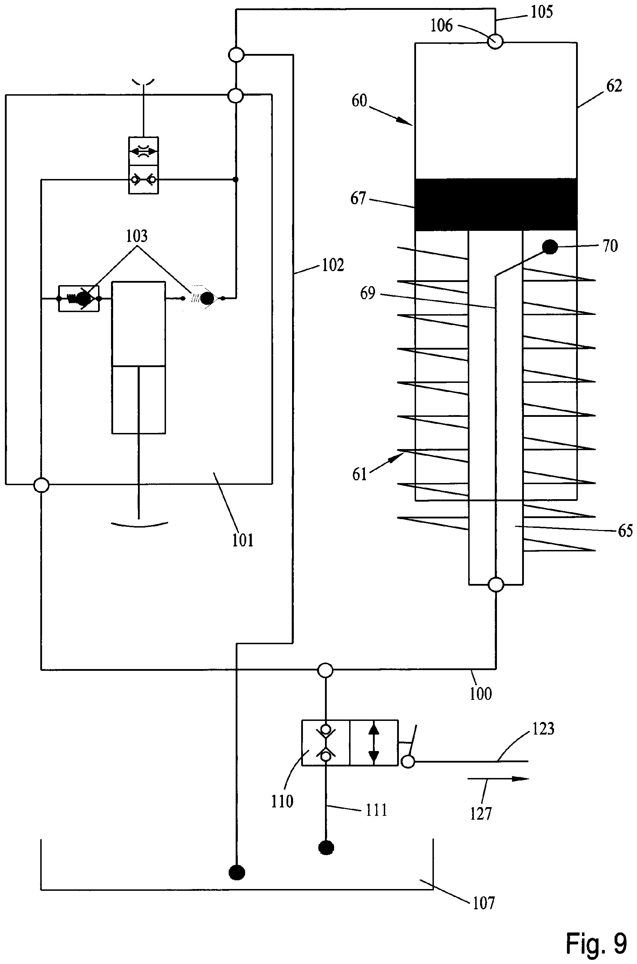

Es ist erkennbar, dass in axialer Richtung zwischen dem Ringkolben 67 und dem ringförmigen Hydraulikdeckel 63 ein Druckraum 68 gebildet wird, welcher radial nach außen vom Hydraulikzylinder 62 und radial nach innen von der im Hydraulikzylinder 62 axial verstellbaren Kolbenstange 65 begrenzt ist. Weiter ist erkennbar, dass die Kolbenstange 65 eine zentrale Längsbohrung 69 aufweist, welche im rechten Endbereich mit einem Gewindeanschluss 73 versehen ist, über welchen die Längsbohrung 69 mit einer hydraulischen Druckleitung in Druckverbindung steht, welche lediglich im Schaltbild der Fig. 9 schematisch mit der Kennzeichnung 100 erkennbar ist und in den Fig. 5 und 6 nicht dargestellt ist. Weiter ist aus den Fig. 5 und 6 erkennbar, dass die Kolbenstange 65 im Endbereich ihres Ringkolbens 67 ausgehend von ihrer Längsbohrung 69 zwei radial verlaufende Querbohrungen 70 aufweist, über welche die Längsbohrung 69 mit dem Druckraum 68 in Verbindung steht. Befindet sich der Schwenkantrieb 60 mit seiner Kolbenstange 65 in seiner in Fig. 6 dargestellten "ausgefahrenen" Sicherungsposition, in welcher sich das Ankermastsystem 3 in der in Fig. 2 dargestellten Sicherheitsschwenklage befindet. Um nun den Schwenkantrieb 60 aus der in Fig. 6 dargestellten Sicherungsposition in die in Fig. 5 dargestellte verkürzte Ausgangsstellung zu bringen, sind die zentrale Längsbohrung 69 zusammen mit den beiden Querbohrungen 70 vorgesehen. Es ist leicht vorstellbar, dass dem Druckraum 68 innerhalb des Hydraulikzylinders 62 aus einer hydraulischen Druckquelle, wie beispielsweise einer in Fig. 9 schematisch dargestellten Hydraulikpumpe 101, über den Gewindeanschluss73 , die Längsbohrung 69 und die beiden Querbohrungen 70 unter Druck stehendes Hydraulikmedium zuführbar ist. Damit kann sich die Kolbenstange 62 bei ausreichendem Systemdruck innerhalb des Druckraumes 68 entgegen der Federkraft des Federpakets 61 in Richtung des Pfeils 77 bewegen, so dass sich die Kolbenstange 62 und damit der Schwenkantrieb in einfacher Weise aus der ausgefahrenen Sicherungsposition der Fig. 6 wieder zurück in die in Fig. 5 dargestellte Ausgangstellung bringen lässt. Um den Systemdruck im Druckraum 68 aufrecht zu erhalten, kann die Hydraulikpumpe 101 beispielweise mit einer Rückschlagventilanordnung 103 versehen sein, wie diese im Schaltbild aus Fig. 9 schematisch dargestellt ist.

Während dieser "Rückstellbewegung" der Kolbenstange 62 zusammen mit ihrem Ringkolben 67 in Richtung des Pfeils 77 verkleinert sich zwangsläufig der sich zwischen dem Ringkolben 67 und dem linken Hydraulikdeckel 64 befindende Hohlraum 74 aus Fig. 6 in eine Art Ringraum, wie dieser in Fig. 5 andeutungsweise erkennbar ist. Um das sich im Hohlraum 74 befindende Medium aus diesem entweichen lassen zu können, ist im linken Hydraulikdeckel 64 eine Entlüftungsbohrung 105 vorgesehen, welche über einen "Leckanschluss" 106 mit einer "Leck-Ölleitung" 102 in Verbindung steht, wie dies schematisch aus dem Schaltbild der Fig. 9 hervorgeht. Diese Leck-Ölleitung 102 führt in eine Art Ausgleichsbehälter 107 (Fig. 9), welcher auch zur Versorgung der im Schaltbild nach Fig. 9 schematisch dargestellten Hydraulikpumpe 101 dienen kann. Auch dient die "Leck-Ölleitung" zum "Druckausgleich", bei der Aktivierung des Schwenkantriebs 60 beim Auslösen der Sicherheitsfunktion, also wenn sich die Kolbenstange 65 aus der in Fig. 5 dargestellten Ausgangsstellung in die in Fig. 6 dargestellte Sicherungsposition begibt.

Zum Auslösen der Sicherheitsfunktion und damit zum Aktivieren des Schwenkantriebs 60 ist im Bereich der Druckleitung 100 ein vorzugsweise mechanisch schaltbares Sicherheitsventil 110 vorgesehen, welches in Fig. 9 ebenfalls lediglich schematisch dargestellt ist. In Fig. 9 ist das Sicherheitsventil 110 in seiner geschlossenen Sperrposition dargestellt, so dass der sich in der Druckleitung 100 befindende, durch die Hydraulikpumpe 101 aufgebrachte Systemdruck nicht "abbauen" kann. Wird das Sicherheitsventil 110 in seine geöffnete Schaltposition gebracht, also von der in Fig. 9 schematisch dargestellten Sperrposition "nach links" in seine geöffnete Durchlassposition verstellt, so wird die Druckleitung 100 über eine Entlastungsleitung 111 zum Ausgleichsbehälter 107 hin "durchgeschaltet", wodurch eine Druckentlastung in der Druckleitung 100 und somit über die Längsbohrung 69 und die Querbohrungen 70 auch eine Druckentlastung im Druckraum 68 des Hydraulikzylinders 62 bewirkt wird.

Da die Feder des Federpakets 61 in der Ausgangsstellung nach Fig. 5 zwischen den beiden Federtellern 75 und 76 einerseits am Ende der Kolbenstange 65 und andererseits am Ende des Hydraulikzylinders 62 in der in Fig. 5 dargestellten Ausgangsstellung unter Vorspannung aufgenommen ist, wird mit dem Abbau des Systemdruckes im Druckraum 68 des Hydraulikzylinders 62 die Kolbenstange 65 zusammen mit dem Federteller 75 aus der Ausgangsposition der Fig. 5 in die Sicherungsposition nach der Fig. 6 bewegt.

Somit ist aus den Fig. 5 und 6 erkennbar, dass auch bei der zweiten Ausführungsvariante des Schwenkantriebes 60 ein Federpaket 61 mit einer Feder vorgesehen ist, welches in der in Fig. 5 dargestellten verkürzten Ausgangstellung des Schwenkantriebs 60 zwischen den Federtellern 75 und 76 unter Vorspannung aufgenommen ist. Diese Ausgangsstellung wird durch den Systemdruck innerhalb der Druckraumes 68 im Hydraulikzylinder 62 gehalten. Wird das Sicherheitsventil 110 bei Erreichen einer vorbestimmten Last an der am Ankerpunkt 11 befestigten PSA des in Fig. 1 dargestellten Ankermastsystems 3 in seine geöffnete Stellung gebracht, so wird die Sicherheitsfunktion des Schwenkantriebs 60 ausgelöst.

Für die Verstellung des Sicherheitsventils 110 ist bei der zweiten Ausführungsvariante des Schwenkantriebs 60 ein in Fig. 7 dargestellter Auslegerabschnitt 80 vorgesehen, welcher mit einer speziellen Auslösemechanik 115 versehen ist. Der Auslegerabschnitt 80 aus Fig. 7 ist dabei in gleicher Weise einzusetzen wie der Auslegerabschnitt 8 aus den Fig. 1 und 2, so dass für den Auslegerabschnitt in den Fig. 1 und 2 auch beide Bezugszeichen 8 und 80 eingesetzt sind.

Wie aus Fig. 7 erkennbar ist, steht die Auslösemechanik 115 mit einem Fangseil 116 in Verbindung, welches über Umlenkrollen 117 frontseitig aus dem Auslegerabschnitt 80 herausgeführt ist. Am äußeren bzw. nach unten aus dem Auslegerabschnitt 80 heraustretenden Ende des Fangseils 116 kann beispielsweise eine Art Karabinerhaken 118 angeordnet sein, über welchen wiederum die PSA am Fangseil 116 befestigt ist. Das Fangseil 116 steht mit einem Fangschlitten 119 der Auslösemechanik 115 in Zugverbindung. Weiter ist aus Fig. 7 erkennbar, dass der Fangschlitten 119 mit seinem dem Fangseil gegenüberliegenden Ende 120 mit einem Zugseil 121 eines Bowdenzuges 122 in Zugverbindung steht. Der am "hinteren" Ende des Bowdenzuges 122 austretende Zugabschnitt 123 steht wiederum mit dem Sicherheitsventil 110 in Verbindung, wie dies schematisch aus Fig. 9 erkennbar ist. Wirkt nun eine Last in Richtung des Pfeiles 126 an der PSA und somit auf das Fangseil 116 ein, welche größer ist als eine vorbestimmte Auslösekraft, so wird der Fangschlitten 119 in Richtung des Pfeils 126 verstellt. Dies bewirkt gleichzeitig eine Verstellung des Zugseils 121 in dieselbe Richtung. Dabei wird auf Grund der Verbindung des Zugseils 121 mit seinem Zugabschnitt 123 mit dem Sicherungsventil aus Fig. 9 eine Stellbewegung des Sicherungsventils in Richtung des Pfeils 127 bewirkt, wodurch das Sicherungsventil aus Fig. 9 in seine geöffnete Stellung gelangt. Damit ist die Sicherheitsfunktion des Schwenkantriebes 60 ausgelöst und das Ankermastsystem 3 bewegt sich aus der in Fig. 1 dargestellten "aufrechten" Ausgangsstellung in die in Fig. 2 dargestellte, abgewinkelte Sicherungsposition.

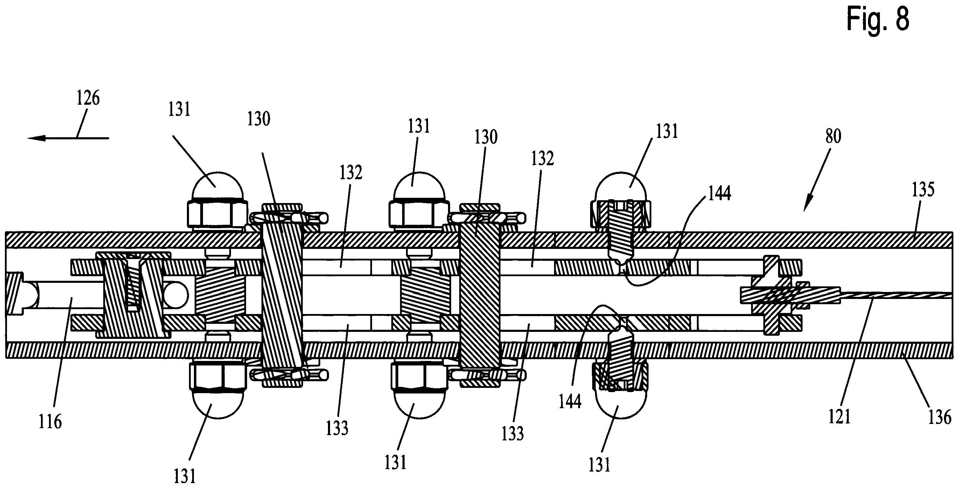

Zum Auslösen des Fangschlittens 119 bei Überschreiten einer vorbestimmten "Grenzlast", kann dieser eine spezielle Ausgestaltung aufweisen, welche in der Schnittdarstellung der Fig. 8 beispielhaft dargestellt ist. Dabei ist aus Fig. 7 und 8 erkennbar, dass der Fangschlitten 119 mittels zweier Führungsbolzen 130 im Auslegerabschnitt 80 begrenzt in Richtung des Pfeils 126 verschiebbar gelagert ist. Wie aus Fig. 8 ersichtlich ist, durchragen die beiden Führungsbolzen 130 die beiden Seitenwände 135, 136 des Auslegabschnittes 80 und sind beidseitig unverlierbar gesichert. Dabei durchragen die Führungszapfen 130 zwei in ihrer axialen Länge begrenzte Führungsschlitze 132 bzw. 133 der Seitenwände 140 bzw. 141 des Fangschlittens 119. Im Weiteren ist aus Fig. 7 andeutungsweise erkennbar, dass der Führungsschlitten 119 insgesamt sechs Rast-zapfen 131 aufweist, deren Ausgestaltung in Fig. 8 detaillierter für die beiden rechten Rastzapfen 131 dargestellt ist. Es ist erkennbar, dass die Rastzapfen in der in Fig. 8 dargestellten Ausgangsposition des Fangschlittens 119 jeweils in Bohrungen der Seitenwände 140, 141 des Fangschlittens 119 federbelastet eingreifen.

In dieser eingerasteten Position wird der gesamte Fangschlitten 119 in der in den Fig. 7 und 8 dargestellten Ausgangsstellung gehalten. Wird nun der Fangschlitten über das Fangseil 116 mit Axialkräften in Richtung des Pfeils 126 belastet, welche über einer vorbestimmte Last von beispielsweise 2 kN liegen, so rasten die Rastzapfen 131 aus den zugehörigen Bohrungen 144 aus, so dass sich der gesamte Fangschlitten 119 mit den Führungsschlitzen 132, 133 entlang der Führungszapfen 130 begrenzt bewegen kann. Durch diese Stellbewegung wird gleichzeitig auch das Zugseil 121 im Bowdenzug 122 und somit auch der aus dem Bowdenzug 122 hausragende Zugabschnitt 123 mit verstellt. Da der Zugabschnitt 123 mit dem Sicherheitsventil 110 aus Fig. 9 in Wirkverbindung steht, wird auch das Sicherheitsventil 110 durch diese Stellbewegung aus seiner in Fig. 9 dargestellten Sperrposition in eine nach links verschobene geöffnete Stellung gebracht. Damit wird die "Entlastungsleitung" 111 aus Fig. 9 von der Druckleitung 100 in den Ausgleichsbehälter 107 durchgeschaltet, so dass der sich in der Druckleitung 100 und dem Druckraum 68 des Hydraulikzylinders 62 aufgebaute Systemdruck entweichen kann und zwangsläufig zum "Entsperren" des Schwenkantriebs 60 zum Auslösen der Sicherheitsfunktion führt.

Es ist erkennbar, dass durch diesen beispielhaft dargestellten Funktionszusammenhang der Auslösemechanik 115 in Verbindung mit dem Hydraulikzylinder 62 und dem Sicherheitsventil 110, das Auslösen der Sicherheitsfunktion des Schwenkantriebs 60 äußerst sicher bewerkstelligt werden kann .

Mit dieser speziellen Ausgestaltung des Schwenkantriebs 60 mit seinem Hydraulikzylinder 62 und der zwischen den Federtellern 75, 76 des Hydraulikzylinders 62 und der Kolbenstange 65 in der Ausgangsstellung unter Vorspannung aufgenommenen Feder des Federpakets 61 lässt sich das Federpaket nach dem Auslösen der Sicherheitsfunktion auch in einfacher Weise wieder in die Ausgangsstellung zurückstellen. Hierzu ist die in Fig. 9 schematisch dargestellte Hydraulikpumpe 101 vorgesehen, welche für die Erzeugung eines gewissen Systemdruckes im Druckraum 68 des Hydraulikzylinders 62 aktiviert wird. Durch die Rückschlagventilanordnung 103 der Hydraulikpumpe 101 bleibt der Systemdruck bei geschlossenem Sicherheitsventil 110 auch solange aufrechterhalten, bis das Sicherheitsventil 110 zum Auslösen der Sicherheitsfunktion geöffnet wird. Das Auslösen der Sicherheitsfunktion erfolgt dabei durch die Betätigung der Auslösemechanik 115 im Auslegerabschnitt 80, welche direkt oder indirekt auf das Sicherheitsventil 110 einwirkt, wie oben beschrieben.

## Patentansprüche

1. Absturzsicherung (1) für Personen mit einem Standsockel (2) mit einer Kippkante (12) und einem mit dem Standsockel in Verbindung stehenden Ankermastsystem (3), an dessen freiem oberen Ende eine persönliche Schutzausrüstung (PSA) befestigt ist, wobei das Ankermastsystem (3) einen unteren Standabschnitt (4) aufweist, welcher in einem Aufnahmegehäuse (5) um eine horizontal verlaufende Schwenkachse (6) relativ zum Standsockel schwenkbar gelagert ist und wobei am Standabschnitt (4) in seinem der Schwenkachse (6) gegenüberliegenden oberen Endbereich ein Auslegerabschnitt (8, 80) vorgesehen ist, welcher um eine Drehachse (9) relativ zum Standabschnitt (4) drehbar am Standabschnitt (4) gelagert ist und mit seinem freien in seiner Ausgangsstellung nach oben gerichteten Ende (10) mit **der persönlichen Schutzausrüstung (PSA)** in einem Ankerpunkt (11) in Verbindung steht, wobei im Bereich des Aufnahmegehäuses (5) ein Schwenkantrieb (15, 60) vorgesehen ist, **dadurch gekennzeichnet, dass** im Schwenkantrieb (15, 60) oder im Auslegerabschnitt (8, 80) ein mechanischer Sensor (43, 44, 115) vorgesehen ist, welcher bei einer Lasteinwirkung auf den Ankerpunkt (11) **der persönlichen Schutzausrüstung (PSA),** die größer als eine vorbestimmte Auslösekraft ist, direkt oder indirekt auf den Schwenkantrieb (15, 60) einwirkt und zu dessen sofortiger Aktivierung führt und eine Sicherheitsfunktion auslöst, durch welche der Standabschnitt (4) und der Auslegerabschnitt (8, 80) aus einer gestreckten, nach oben gerichteten Ausgangsstellung in eine abgewinkelte Sicherheitsstellung verstellt wird, in welcher der Ankerpunkt (11) eine relativ zum Standsockel (2) nach unten und gleichzeitig weg von der Kippkante (12) des Standsockels (2) **in Richtung des Aufnahmegehäuses (5)** verstellte Position einnimmt.

2. Absturzsicherung nach Anspruch 1, **dadurch gekennzeichnet, dass** der Schwenkantrieb (15) nach Art eines Federbeines ausgebildet ist und eine zwischen zwei Federtellern (40, 41) angeordnete, in der Ausgangsstellung des Schwenkantriebs (15) unter Vorspannung stehende, komprimierte Feder (30) aufweist, welche bei Aktivierung des Schwenkantriebs (15) durch eine mechanische Entriegelungsvorrichtung (48, 49) entspannbar wird.

3. Absturzsicherung nach Anspruch 2, **dadurch gekennzeichnet, dass** der erste Federteller (40) in einem Endbereich eines Arbeitszylinders (56) feststehend angeordnet ist und
dass der zweite Federteller (41) am Ende einer Kolbenstange (54) feststehend angeordnet ist und dass die Kolbenstange (54) im Arbeitszylinder (56) begrenzt axial verstellbar aufgenommen ist und in ihrem dem zweiten Federteller (41) gegenüberliegenden Endbereich einen Führungskolben (55) aufweist.

4. Absturzsicherung nach Anspruch 3, **dadurch gekennzeichnet, dass** der Arbeitszylinder (56) in seinem dem zweiten Federteller (41) gegenüberliegenden Endbereich einen Verschluss (57) aufweist, in welchem ein in den Arbeitszylinder (56) hinein ragender Fixierdorn (51) angeordnet ist, welcher in seinem in den Arbeitszylinder (56) hinein ragenden Endbereich eine umlaufende Nut (50) aufweist,
dass die Kolbenstange (54) in ihrem zum Verschluss (57) hin liegenden Endbereich eine in einem Durchbruch einer Zylinderwand der Kolbenstange (54) angeordnete Rastkugel (49) aufweist, welche durch eine Entriegelungshülse (48) in der umlaufenden Nut (50) des Fixierdorns (51) in der Ausgangsstellung des Schwenkantriebs (15) gehalten ist und
dass die Entriegelungshülse (48) durch Entriegelungsstifte (52) relativ zur Kolbenstange (54) in eine Stellung verschiebbar ist, in welcher die Rastkugel (49) durch eine abgestufte Innenbohrung der Entriegelungshülse (48) frei gegeben und radial nach außen verstellbar ist, so dass die Formschlussverbindung zwischen der Kolbenstange (54) und dem Fixierdorn (51) aufgehoben ist und die Kolbenstange (54) aus dem Arbeitszylinder (56) durch die Federkraft der Feder (30) herausgeschoben und in ihre Sicherungsstellung bringbar ist.

5. Absturzsicherung nach Anspruch 4, **dadurch gekennzeichnet, dass** auf dem Fixierdorn (51) ein Auslösezylinder (44) axial verstellbar angeordnet ist, in dessen dem Fixierdorn (51) benachbarten Endbereich eine mit Hydraulikmedium gefüllte Überwachungskammer (43) vorgesehen ist und dass das Hydraulikmedium über ein Druckbegrenzungsventil (45) aus der Überwachungskammer zur Druckreduzierung entweichen kann und dadurch der Auslösezylinder (44) in einer Stellrichtung (53) verstellbar ist und die Entriegelungsstifte (52) mit der Entriegelungshülse (48) in die Entriegelungsstellung zur Freigabe der Rastkugel (49) verstellt werden.

6. Absturzsicherung nach einem der Ansprüche 4 bis 5,
**dadurch gekennzeichnet, dass** die Kolbenstange (54) in ihrem der Entriegelungshülse (48) benachbarten Endbereich mit Überströmkanälen (47) versehen ist, welche von einer zwischen der Kolbenstange (54) und dem Arbeitszylinder (56) liegenden, mit Hydraulikmedium gefüllten Dämpfungskammer (46) mit einem zwischen dem Verschluss (57) und dem Führungskolben (55) liegenden Aufnahmeraum innerhalb des Arbeitszylinders (56) in Verbindung steht und durch welche bei der Verstellung der Kolbenstange (54) aus ihrer Ausgangsstellung in ihre ausgefahrene Endstellung in eine bzw. die Stellrichtung (53) Hydraulikmedium zur Bewegungsdämpfung hindurch strömt.

7. Absturzsicherung nach Anspruch 1, **dadurch gekennzeichnet, dass** der Schwenkantrieb (60) nach Art eines Federbeines ausgebildet ist und eine zwischen zwei Federtellern (75, 76) angeordnete, in der Ausgangsstellung des Schwenkantriebes (60) unter Vorspannung stehende, komprimierte Feder eines Federpaketes (61) aufweist, welche bei Aktivierung des Schwenkantriebes (60) durch eine Entriegelungsvorrichtung (110, 115, 116, 121, 123)) entspannbar wird, dass im Bereich des Federpakets (61) ein Hydraulikzylinder (62) mit einem Druckraum (68) vorgesehen ist, dessen Kolbenstange (65) bei Anliegen eines vorgegebenen Systemdruckes im Druckraum (68) in einer verkürzten Ausgangsstellung des Hydraulikzylinders (62) gehalten wird.

8. Absturzsicherung nach Anspruch 7, **dadurch gekennzeichnet, *dass*** die Entriegelungsvorrichtung eine Auslösemechanik (115) mit einem Fangschlitten (115) aufweist, und dass der Fangschlitten (115) begrenzt axial verstellbar im Auslegeabschnitt (80) angeordnet ist und bei **Krafteinwirkung,** welche größer ist als eine vorgegebene Auslösekraft aus einer Ausgangsstellung in eine Sicherungsstellung bringbar ist und, dass durch die Stellbewegung 126) des Fangschlittens (15) ein Sicherheitsventil (110) betätigbar ist, durch dessen Verstellung aus einer geschlossenen Sperrstellung in eine geöffnete Durchlassstellung der Systemdruck im Druckraum (68) des Hydraulikzylinders (62) zum Auslösen der Sicherheitsfunktion des Schwenkantriebs (60) abgebaut wird.

9. Absturzsicherung nach Anspruch 7 oder 8, **dadurch gekennzeichnet, dass** zum Zurückstellen des Schwenkantriebes (60) aus der ausgelösten Sicherheitsposition in die verkürzte Ausgansstellung eine Hydraulikpumpe (101) zum Erzeugen des Systemdruckes vorgesehen ist und dass der Systemdruck dem Hydraulikzylinder (62) des Schwenkantriebes (60) über eine Druckleitung (100) und über die Kolbenstange (65) zuführbar ist und bei Erreichen des vorbestimmten Systemdruckes im Druckraum (68) eine Verstellung der Kolbenstange (65) im **Hydraulikzylinder (62) entgegen** der Federkraft (77) **des Federpakets** (61) bewirkt wird.

## Claims

1. Protective device (1) to prevent persons from falling, comprising a standing base (2) with a tilting edge (12) and an anchor mast system (3) which is connected to the standing base and to the free upper end of which personal protective equipment (PPE) is fastened, wherein the anchor mast system (3) has a lower standing portion (4), which is mounted in a receiving housing (5) so as to be pivotable about a horizontally running pivot axis (6) relative to the standing base, and wherein a cantilever portion (8, 80) is provided on the standing portion (4), in its upper end region opposite the pivot axis (6), said cantilever portion (8, 80) being mounted on the standing portion (4) so as to be rotatable about an axis of rotation (9) relative to the standing portion (4) and being connected at its free end (10), which is directed upward in its starting position, to the personal protective equipment (PPE) at an anchor point (11), wherein a pivot drive (15, 60) is provided in the region of the receiving housing (5), **characterized in that** a mechanical sensor (43, 44, 115) is provided in the pivot drive (15, 60) or in the cantilever portion (8, 80), said sensor, in the event of the load action on the anchor point (11) of the personal protective equipment (PPE) that is greater than a predetermined triggering force, acting directly or indirectly on the pivot drive (15, 60) and leading to the immediate activation thereof and triggering a safety function, by means of which the standing portion (4) and the cantilever portion (8, 80) is adjusted from an extended, upwardly directed starting position into an angled safety position, in which the anchor point (11) takes up a position adjusted downward relative to the standing base (2) and at the same time away from the tilting edge (12) of the standing base (2) in the direction of the receiving housing (5).

2. Protective device to prevent falling according to Claim 1, **characterized in that** the pivot drive (15) is designed in the manner of a spring strut and has a compressed spring (30) which is arranged between two spring plates (40, 41), is under pretension in the starting position of the pivot drive (15) and, when the pivot drive (15) is activated, can be relaxed by means of a mechanical release device (48, 49) .

3. Protective device to prevent falling according to Claim 2, **characterized in that** the first spring plate (40) is arranged fixedly in an end region of a working cylinder (56), and **in that** the second spring plate (41) is arranged fixedly at the end of a piston rod (54), and **in that** the piston rod (54) is accommodated in the working cylinder (56) so as to be axially adjustable to a limited extent and has a guide piston (55) in its end region opposite the second spring plate (41).

4. Protective device to prevent falling according to Claim 3, **characterized in that** the working cylinder (56), in its end region opposite the second spring plate (41), has a closure (57) in which a fixing spike (51) is arranged, said fixing spike projecting into the working cylinder (56) and having an encircling groove (50) in its end region projecting into the working cylinder (56), **in that** the piston rod (54), in its end region lying toward the closure (57), has a latching ball (49) which is arranged in an aperture of a cylinder wall of the piston rod (54) and is held in the starting position of the pivot drive (15) in the encircling groove (50) of the fixing spike (51) by a release sleeve (48), and **in that** the release sleeve (48) is displaceable relative to the piston rod (54) by means of release pins (52) into a position in which the latching ball (49) is released by a stepped inner bore of the release sleeve (48) and is adjustable radially outward, and therefore the form-fitting connection between the piston rod (54) and the fixing spike (51) is removed and the piston rod (54) is pushed out of the working cylinder (56) by the spring force of the spring (30) and can be brought into its securing position.

5. Protective device to prevent falling according to Claim 4, **characterized in that** a triggering cylinder (44) is arranged in an axially adjustable manner on the fixing spike (51), and a monitoring chamber (43) filled with hydraulic medium is provided **in that** end region of said triggering cylinder which is adjacent to the fixing spike (51), and **in that** the hydraulic medium can escape from the monitoring chamber via a pressure-limiting valve (45) in order to reduce pressure and, as a result, the triggering cylinder (44) is adjustable in an adjusting direction (53) and the release pins (52) are adjusted together with the release sleeve (48) into the release position in order to release the latching ball (49).

6. Protective device to prevent falling according to either of Claims 4 and 5, **characterized in that** the piston rod (54) is provided with overflow channels (47) in its end region adjacent to the release sleeve (48), said overflow channels being connected by a damping chamber (46), which lies between the piston rod (54) and the working cylinder (56) and is filled with hydraulic medium, to a receiving space lying between the closure (57) and the guide piston (55) within the working cylinder (56), and through which overflow channels, during the adjustment of the piston rod (54) from its starting position into its extended end position, hydraulic medium flows in a or the adjusting direction (53) in order to damp the movement.

7. Protective device to prevent falling according to Claim 1, **characterized in that** the pivot drive (60) is designed in the manner of a spring strut, and has a compressed spring of a spring assembly (61), said spring being arranged between two spring plates (75, 76) and being under prestress in the starting position of the pivot drive (60) and, when the pivot drive (60) is activated, being able to be relaxed by means of a release device (110, 115, 116, 121, 123), **in that** a hydraulic cylinder (62) with a pressure space (68) is provided in the region of the spring assembly (61), the piston rod (65) of which hydraulic cylinder is held in a shortened starting position of the hydraulic cylinder (62) when a predetermined system pressure is present in the pressure space (68).

8. Protective device to prevent falling according to Claim 7, **characterized in that** the release device has a triggering mechanism (115) with an arrester slide (115), and **in that** the arrester slide (115) is arranged so as to be axially adjustable to a limited extent in the cantilever portion (80) and, in the event of an action of force which is greater than a predetermined triggering force, can be brought from a starting position into a securing position, and **in that**, by means of the adjusting movement (126) of the arrester slide (15), a safety valve (110) is actuable, by means of the adjustment of which from a closed blocking position into an open passage position, the system pressure in the pressure space (68) of the hydraulic cylinder (62) is dissipated in order to trigger the safety function of the pivot drive (60).

9. Protective device to prevent falling according to Claim 7 or 8, **characterized in that**, for the resetting of the pivot drive (60) from the triggered safety position into the shortened starting position, a hydraulic pump (101) is provided for generating the system pressure, and **in that** the system pressure can be supplied to the hydraulic cylinder (62) of the pivot drive (60) via a pressure line (100) and via the piston rod (65) and, when the predetermined system pressure is reached in the pressure space (68), an adjustment of the piston rod (65) in the hydraulic cylinder (62) is brought about counter to the spring force (77) of the force assembly (61).

## Revendications

1. Dispositif de sécurité antichute (1) pour les personnes, comprenant un socle (2) muni d'un bord de basculement (12) et un système de mât d'ancrage (3) en liaison avec le socle, à l'extrémité supérieure libre duquel est fixé un équipement de protection individuelle (EPI), le système de mât d'ancrage (3) comprenant une section de support inférieure (4), qui est montée pivotante autour d'un axe de pivotement horizontal (6) par rapport au socle dans un boîtier de réception (5), et une section en porte-à-faux (8, 80) étant prévue sur la section de support (4) dans sa zone d'extrémité supérieure opposée à l'axe de pivotement (6), qui est montée rotative sur la section de support (4) autour d'un axe de rotation (9) par rapport à la section de support (4), et est en liaison avec son extrémité libre (10) orientée vers le haut dans sa position initiale avec l'équipement de protection individuelle (EPI) dans un point d'ancrage (11), un entraînement de pivotement (15, 60) étant prévu dans la zone du boîtier de réception (5), **caractérisé en ce qu'**un capteur mécanique (43, 44, 115) est prévu dans l'entraînement de pivotement (15, 60) ou dans la section en porte-à-faux (8, 80), qui, lors de l'action d'une charge sur le point d'ancrage (11) de l'équipement de protection individuelle (EPI), qui est supérieure à une force de déclenchement prédéterminée, agit directement ou indirectement sur l'entraînement de pivotement (15, 60) et conduit à son activation immédiate et déclenche une fonction de sécurité, par laquelle la section de support (4) et la section en porte-à-faux (8, 80) sont ajustées à partir d'une position initiale étirée, orientée vers le haut, dans une position de sécurité repliée, dans laquelle le point d'ancrage (11) prend une position ajustée vers le bas par rapport au socle (2) et simultanément éloignée du bord de basculement (12) du socle (2) dans la direction du boîtier de réception (5).

2. Dispositif de sécurité antichute selon la revendication 1, **caractérisé en ce que** l'entraînement de pivotement (15) est configuré sous la forme d'une jambe de force à ressort et comprend un ressort comprimé (30) agencé entre deux cuvettes de ressort (40, 41), qui se trouve sous précontrainte dans la position initiale de l'entraînement de pivotement (15), qui peut être détendu lors de l'activation de l'entraînement de pivotement (15) par un dispositif de déverrouillage mécanique (48, 49).

3. Dispositif de sécurité antichute selon la revendication 2, **caractérisé en ce que** la première cuvette de ressort (40) est agencée de manière fixe dans une zone d'extrémité d'un cylindre de travail (56) et
**en ce que** la deuxième cuvette de ressort (41) est agencée de manière fixe à l'extrémité d'une tige de piston (54) et
**en ce que** la tige de piston (54) est reçue de manière ajustable axialement de façon limitée dans le cylindre de travail (56) et comprend un piston de guidage (55) dans sa zone d'extrémité opposée à la deuxième cuvette de ressort (41).

4. Dispositif de sécurité antichute selon la revendication 3, **caractérisé en ce que** le cylindre de travail (56) comprend une fermeture (57) dans sa zone d'extrémité opposée à la deuxième cuvette de ressort (41), dans laquelle une broche de fixation (51) dépassant dans le cylindre de travail (56) est agencée, qui comprend une rainure périphérique (50) dans sa zone d'extrémité dépassant dans le cylindre de travail (56), **en ce que** la tige de piston (54) comprend dans sa zone d'extrémité située vers la fermeture (57) une bille d'encliquetage (49) agencée dans une percée d'une paroi de cylindre de la tige de piston (54), qui est maintenue par une douille de déverrouillage (48) dans la rainure périphérique (50) de la broche de fixation (51) dans la position initiale de l'entraînement de pivotement (15) et
**en ce que** la douille de déverrouillage (48) peut coulisser par des goupilles de déverrouillage (52) par rapport à la tige de piston (54) dans une position, dans laquelle la bille d'encliquetage (49) est libérée par un alésage intérieur échelonné de la douille de déverrouillage (48) et peut être ajustée radialement vers l'extérieur, de telle sorte que la liaison par accouplement de forme entre la tige de piston (54) et la broche de fixation (51) soit conservée et que la tige de piston (54) soit coulissée hors du cylindre de travail (56) par la force de ressort du ressort (30) et puisse être amenée dans sa position de sécurité.

5. Dispositif de sécurité antichute selon la revendication 4, **caractérisé en ce qu'**un cylindre de déclenchement (44) est agencé de manière ajustable axialement sur la broche de fixation (51), dans la zone d'extrémité voisine de la broche de fixation (51) duquel une chambre de surveillance (43) remplie avec un milieu hydraulique est prévue, et **en ce que** le milieu hydraulique peut être déchargé de la chambre de surveillance par l'intermédiaire d'une soupape de limitation de la pression (45) pour la réduction de la pression, et le cylindre de déclenchement (44) peut ainsi être ajusté dans une direction d'ajustement (53) et les goupilles de déverrouillage (52) sont ajustées avec la douille de déverrouillage (48) dans la position de déverrouillage pour la libération de la bille d'encliquetage (49).

6. Dispositif de sécurité antichute selon l'une quelconque des revendications 4 à 5, **caractérisé en ce que** la tige de piston (54) est munie, dans sa zone d'extrémité voisine de la douille de déverrouillage (48), de canaux de trop-plein (47), qui sont en liaison par une chambre d'amortissement (46) située entre la tige de piston (54) et le cylindre de travail (56), remplie avec un milieu hydraulique, avec une chambre de réception située entre la fermeture (57) et le piston de guidage (55) à l'intérieur du cylindre de travail (56), et par lesquels du milieu hydraulique s'écoule pour amortir le mouvement lors de l'ajustement de la tige de piston (54) à partir de sa position initiale dans sa position finale sortie dans une ou la direction d'ajustement (53).

7. Dispositif de sécurité antichute selon la revendication 1, **caractérisé en ce que** l'entraînement de pivotement (60) est configuré sous la forme d'une jambe de force à ressort et comprend un ressort comprimé d'un paquet de ressort (61), agencé entre deux cuvettes de ressort (75, 76), qui se trouve sous précontrainte dans la position initiale de l'entraînement de pivotement (60), qui peut être détendu lors de l'activation de l'entraînement de pivotement (60) par un dispositif de déverrouillage (110, 115, 116, 121, 123), **en ce qu'**un cylindre hydraulique (62) avec une chambre de pression (68) est prévu dans la zone du paquet de ressort (61), dont la tige de piston (65) est maintenue dans une position initiale raccourcie du cylindre hydraulique (62) lors de l'application d'une pression de système prédéterminée dans la chambre de pression (68).

8. Dispositif de sécurité antichute selon la revendication 7, **caractérisé en ce que** le dispositif de déverrouillage comprend un mécanisme de déclenchement (115) avec une natte d'amortissement (115), et **en ce que** la natte d'amortissement (115) est agencée de manière ajustable axialement de façon limitée dans la section en porte-à-faux (80) et peut être amenée lors de l'action d'une force qui est supérieure à une force de déclenchement prédéterminée à partir d'une position initiale dans une position de sécurité, et **en ce qu'**une soupape de sécurité (110) peut être actionnée par le mouvement d'ajustement (126) de la natte d'amortissement (15), par l'ajustement de laquelle à partir d'une position de blocage fermée dans une position de passage ouverte, la pression de système dans la chambre de pression (68) du cylindre hydraulique (62) est réduite pour le déclenchement de la fonction de sécurité de l'entraînement de pivotement (60) .

9. Dispositif de sécurité antichute selon la revendication 7 ou 8, **caractérisé en ce que**, pour la réinitialisation de l'entraînement de pivotement (60) à partir de la position de sécurité déclenchée dans la position initiale raccourcie, une pompe hydraulique (101) est prévue pour la génération de la pression de système, et **en ce que** la pression de système peut être introduite dans le cylindre hydraulique (62) de l'entraînement de pivotement (60) par l'intermédiaire d'une conduite de pression (100) et par l'intermédiaire de la tige de piston (65) et, lorsque la pression de système prédéterminée est atteinte dans la chambre de pression (68), un ajustement de la tige de piston (65) dans le cylindre hydraulique (62) est effectué contre la force de ressort (77) du paquet de ressort (61).
